# EUROPÄISCHE PATENTSCHRIFT

(11) **EP 0 413 944 B1**
(45) Veröffentlichungstag und Bekanntmachung des Hinweises auf die Patenterteilung: **18.11.1993**
(21) Anmeldenummer: 90113423.9
(22) Anmeldetag: 13.07.1990
(51) Int. Cl.: F16K 1/20, F02C 9/00

(54) **Klappenventil für Rohrleitungen grosser Nennweiten**
Butterfly valve for pipes of greater nominal width
Soupape à papillon pour conduites de grande largeur nominal

(30) Priorität: 25.08.1989 DE 8910185 U
(43) Veröffentlichungstag der Anmeldung: 27.02.1991
(73) Patentinhaber: HERMANN RAPPOLD U.CO.GMBH, D-52353 Düren (DE)
(72) Erfinder: Stolberg, Hermann-Josef, D-5160 Düren (DE); Esser, Heribert, D-5100 Aachen (DE)
(74) Vertreter: Brückner, Raimund

(56) Entgegenhaltungen:
- EP-A- 0 311 153
- DE-A- 2 607 079
- DE-B- 2 801 673
- US-A- 4 821 507
- US-A- 4 932 437

## Beschreibung

Die Erfindung betrifft ein Klappenventil für Rohrleitungen großer Nennweiten, dessen Klappengehäuse zwei mit je einem Gehäusedichtsitz versehene Leitungsanschlüsse aufweist, und dessen Ventilklappe zwischen beiden Gehäusedichtsitzen um eine am Klappenrand angeordnete Schwenkachse schwenkbar ist und sich aus einem Tragrahmen aus Eisenprofilen, einer an dem Tragrahmen befestigten Klappenblende sowie einer an dieser umfänglich befestigten und abwechselnd mit den Gehäusedichtsitzen zusammenwirkenden Dichtungsanordnung zusammensetzt.

Klappenventile dieser Art sind z.B. aus der DE-A- 26 07 079 bekannt und werden bekanntlich insbesondere bei Kraftwerken als Umschaltklappen für die Rauchgasleitungen verwendet. Derartige Klappen haben bekanntlich außergewöhnlich große Abmessungen, mit einem bis zu 100 m² betragenden Querschnitt.

Bei den bisher bekannten Klappenventilen dieser Art weist die Klappenblende zwei beidseitig des Tragrahmens angeordnete Blechplatten auf, die an ihrem Außenrand mit je einer als Lamellendichtung ausgebildeten Doppeldichtung versehen sind. Es versteht sich von selbst, daß eine solche Ausbildung der Ventilklappe ein sehr großes Gewicht hat, was sich nicht nur in den Herstellungskosten der Klappe niederschlägt, sondern auch im Hinblick auf die Auslegung des Klappenantriebes nachteilig ist.

Der Erfindung liegt die Aufgabe zugrunde, diese Nachteile zu vermeiden und ein Klappenventil der eingangs genannten Art zu schaffen, das mit einer möglichst leichten und dennoch in Schließstellung stets einwandfrei gasdicht schließenden Ventilklappe versehen ist.

Diese Aufgabe wird erfindungsgemäß dadurch gelost, daß die Klappenblende aus einer einzigen Blechplatte besteht, die mit durch Eisenprofile gebildeten Verstärkungsrippen und einem den Tragrahmen vollumfänglich umschließenden Blechkragen versehen ist, an dem die Dichtungsanordnung befestigt ist, und daß die Anlenkung der Ventilklappe am Klappengehäuse durch mindestens einen gekröpften Scharnierhebel erfolgt, dessen einer Arm am Tragrahmen auf der von der Blechplatte abgekehrten Tragrahmenseite befestigt ist, und dessen anderer Arm um die Achse eines am Klappengehäuse gelagerten Schwenkbolzens drehbar ist.

Auf diese Weise ist es möglich, das Gewicht der Ventilklappe im Vergleich zum Stand der Technik beträchtlich, nämlich um mehrere Tonnen herabzusetzen, was nicht nur eine erhebliche Verringerung der Herstellungskosten, sondern auch eine wesentlich günstigere Auslegung des Klappenantriebes mit sich bringt. Die neuerungsgemäße Klappe ist dennoch in den beiden Schließstellungen des Ventils einwandfrei dicht.

Es ist im Sinne eines leichten Zusammenbaus der Klappenblende von Vorteil, wenn die Blechplatte am Tragrahmen durch T-Profile aufgehängt ist, die in entsprechenden Gegenprofilen des Tragrahmens geführt sind. Hierbei ist es zweckmäßig, wenn die T-Profile im Randbereich der Ventilklappe liegen.

Die Erfindung schlägt ferner vor, die Verstärkungsrippen als L-Profile auszubilden, deren einer Schenkel stirnseitig an der Blechplatte angeschweißt ist und deren anderer Schenkel großflächig an dem Tragrahmen befestigt ist. Auf diese Weise kann eine hinreichende Steifigkeit der Blechplatte mit einem verhältnismäßig geringen Zusatzgewicht erreicht werden.

Es ist ferner im Sinne einer einfachen Herstellung von Vorteil, wenn die Scharnierhebel aus im Winkel zueinander zusammengeschweißten Eisenprofilen bestehen, wobei der eine Hebelarm an einem Eisenprofil des Tragrahmens befestigt ist und der andere Hebelarm den Schwenkbolzen für die Ventilklappe aufnimmt. Hierbei ist es zweckmäßig, die Eisenprofile des oder der Scharnierhebel als I-Profile auszubilden.

Es ist ebenfalls von Vorteil, wenn der oder die Scharnierhebel in je einer Gehäusenische des Klappengehäuses eingekapselt sind.

Zwecks einer Vereinfachung der Dichtungsanordnung sieht ferner die Erfindung vor, daß die Dichtungsanordnung eine beidseitig wirkende Lamellendichtung aufweist, die in den Schaltstellungen das Ventil gegen je einen der beiden Gehäusedichtsitze auf Anschlag ist.

Die Erfindung wird nachfolgend anhand zweier Ausführungsbeispiele näher beschrieben.

Es zeigen:
- Figur 1: ein erfindungsgemäßes Klappenventil, in der einen Schließstellung und im Längsschnitt dargestellt,
- Figur 2: eine Ansicht in Richtung des Pfeils II aus Figur 1.
- Figur 3: eine andere Ausführungsform des erfindungsgemäßen Klappenventils, dessen Gehäusedichtsitze in einem Winkel von 90° zueinander liegen, und dessen Dichtungsanordnung durch eine beidseitig anschlagende Lamellendichtung gebildet ist, entsprechend der Einzelheit III aus Fig. 1 und vergrößert dargestellt.

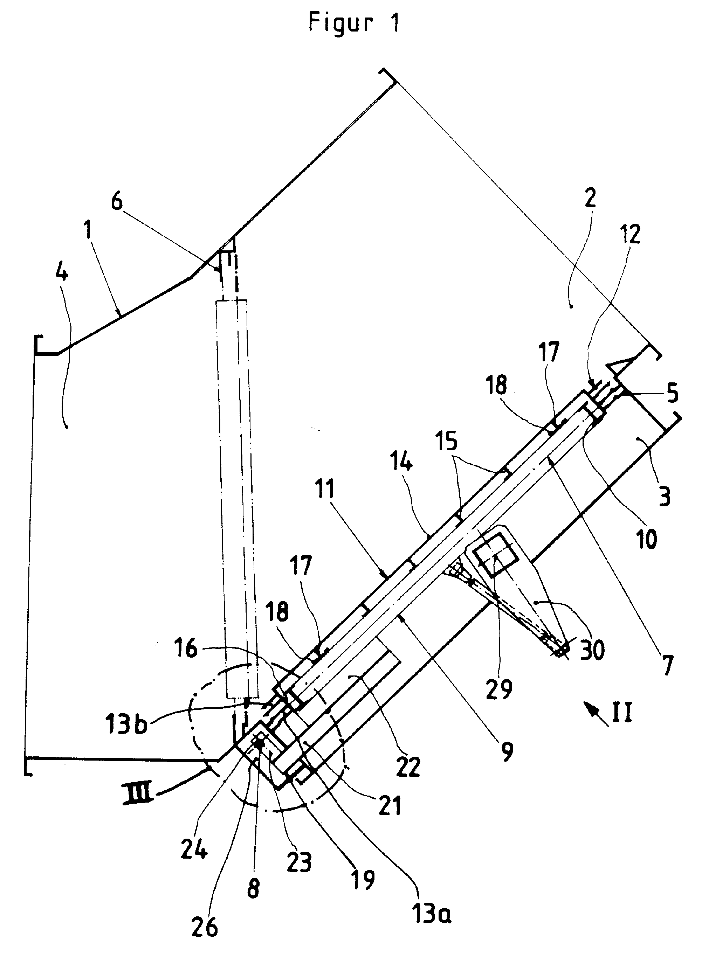

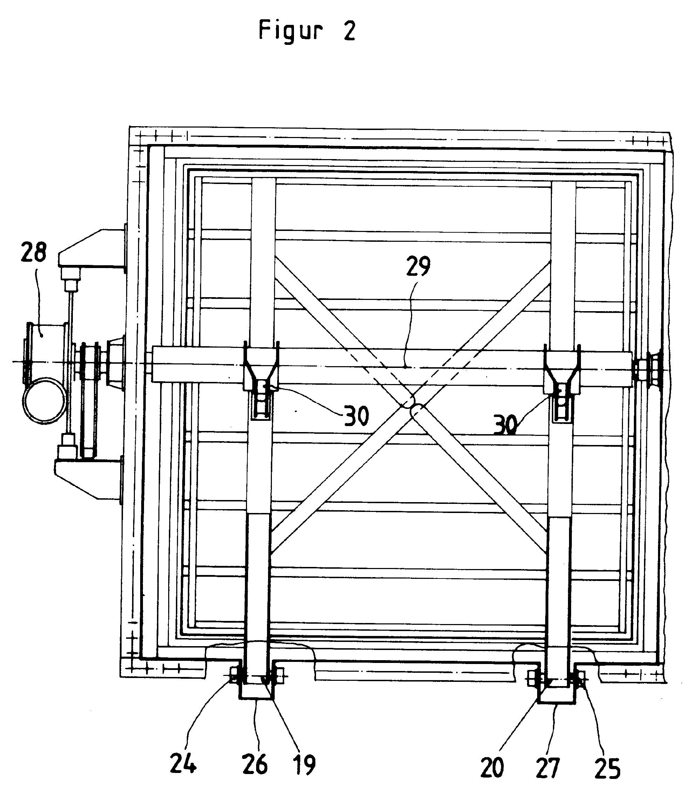

Beim Klappenventil nach den Figuren 1 und 2 handelt es sich um eine sogenannte Umschaltklappe, deren Klappengehäuse 1 drei Leitungsanschlüsse 2, 3 und 4 aufweist, von denen die Anschlüsse 3 und 4 mit je einem Gehäusedichtsitz 5 bzw. 6 versehen sind.

Die Ventilklappe 7 ist zwischen den Gehäusedichtsitzen 5 und 6 um eine am Klappenrand angeordnete Schwenkachse 8 schwenkbar und setzt sich aus einem Tragrahmen 9 aus L-Profilen 10, einer an dem Tragrahmen 9 schwimmend befestigten Klappenblende 11 sowie einer an dieser umfänglich befestigten Dichtungsanordnung 12 bestehend aus zwei metallischen Doppeldichtungen 13a und 13b zusammen, die mit je einem der beiden Gehäusedichtsitze 5 bzw. 6 zusammenwirken.

Die Klappenblende 11 besteht aus einer einzigen Blechplatte 14, die mit durch L-Profile gebildeten Verstärkungsrippen 15 und einem den Tragrahmen 9 vollumfänglich umschließenden Blechkragen 16 versehen ist, an dem die Doppeldichtungen 13a und 13b angebracht sind. Die Blechplatte 10 ist am Tragrahmen 9 auf der dem Gehäusedichtsitz 6 zugewandten Tragrahmenseite aufgehängt.

Die Verstärkungsrippen 15 sind als L-Profile ausgebildet, deren einer Schenkel stirnseitig an der Blechplatte 10 angeschweißt ist und deren anderer Schenkel großflächig an dem Tragrahmen 9 befestigt ist.

Die Aufhängung der Blechplatte 14 am Tragrahmen 9 erfolgt durch T-Profile 17, die im Randbereich der Ventilklappe liegen und in entsprechenden Gegenprofilen 18 des Tragrahmens 9 geführt sind.

Die Ventilklappe 7 weist ferner zwei gekröpfte Scharnierhebel 19, 20 auf, die aus im Winkel zueinander zusammengeschweißten Eisenprofilen bestehen, wobei der eine Hebelarm 21 an einem Eisenprofil 22 des Tragrahmens 9 befestigt ist und der andere Hebelarm 23 einen Schwenkbolzen 20 bzw. 25 aufnimmt, welcher die Schwenkachse 8 für die Ventilklappe bildet. Sowohl die Eisenprofile der Scharnierhebel 19 und 20 als auch die Eisenprofile 22 des Tragrahmens 9 sind als I-Profile ausgebildet.

Die Schwenkbolzen 24, 25 sind in Seitenwänden von Gehäusenischen 26, 27 des Klappengehäuses 1 gelagert. Darin sind die Scharnierhebel 19, 20 untergebracht.

Die Doppeldichtungen 13a und 13b sind als Lamellendichtungen aus elastischen Blechstreifen hergestellt. Derartige Blechdichtungen sind allgemein bekannter Stand der Technik und werden daher nicht näher beschrieben.

Die Ventilklappe 7 wird einseitig durch ein Schneckengetriebe 28 über eine Antriebswelle 29 und von dieser betätigte Kniehebel 30 angetrieben. Ein derartiger Antrieb ist auch allgemeiner Stand der Technik und wird daher ebenfalls nicht näher beschrieben.

Wie aus der Figur 1 ersichtlich, sind in der dort dargestellten Schließstellung die Leitungsabschnitte vor und hinter der Ventilklappe 7 durch die Doppeldichtung 13a im Zusammenwirken mit dem Blechkragen 16 und der Blechplatte 10 völlig gasdicht voneinander abgetrennt. Durch die schwimmende Aufhängung der Blechplatte 10 mittels der miteinander zusammenwirkenden Eisenprofilen 17 und 18 ist dennoch die Ventilklappe 7 im Betrieb entlang der Dichtfläche bewegbar, um etwaige Verformungen der Klappe innerhalb bestimmter Toleranzen auszugleichen, ohne ihre Dichtigkeit zu beeinträchtigen. Das gleiche gilt auch für die zweite Schließstellung des Ventils, die in Figur 1 strichpunktiert dargestellt ist.

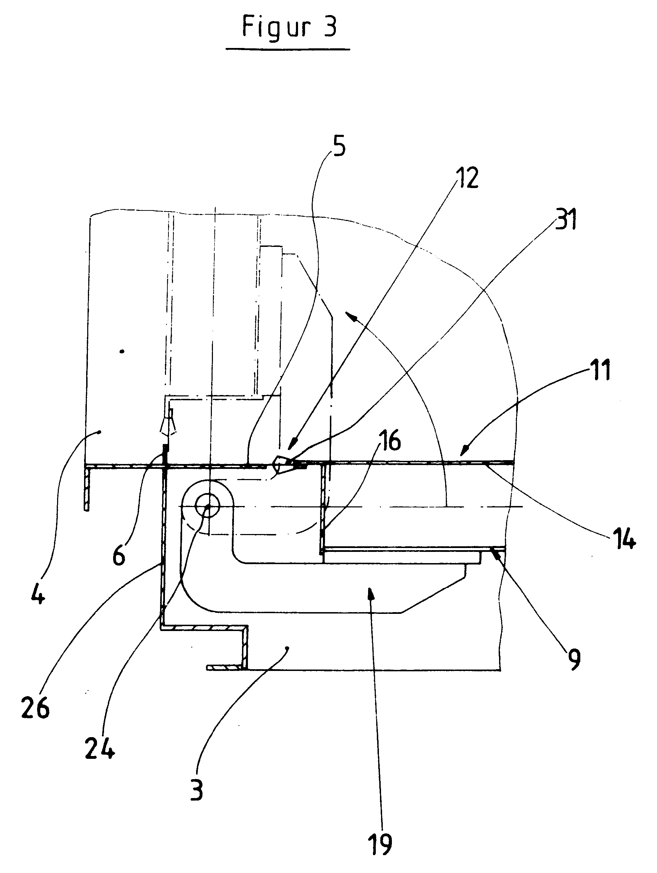

Das Klappenventil nach Figur 3 unterscheidet sich vom Klappenventil und den Figuren 1 und 2 lediglich dadurch, daß die Gehäusedichtsitze 5 und 6 in einem Winkel von 90° zueinander liegen, und daß die Dichtungsanordnung 12 aus einer einzigen Lamellendichtung 31 besteht, die beidseitig gegen die mit ihr Zusammenwirkenden Gehäusedichtsitze 5 und 6 anschlagen kann, nämlich einerseits gegen den Gehäusedichtsitz 5 in der einen, mit vollen Linien dargestellten Schaltstellung, und andererseits gegen den Gehäusedichtsitz 6 in der anderen, mit strichpunktierten Linien dargestellten Schaltstellung. Es besteht auch die Möglichkeit beidseitig der Lamellendichtung 31 je eine weitere Lamellendichtung anzuordnen, die mit der Lamellendichtung 31 jeweils eine Doppeldichtung bildet, wie etwa die Doppeldichtungen 13a und 13b gemäß den Figuren 1 und 2.

Es versteht sich von selbst, daß die erfindungsgemäße einwandige Ventilklappe 7 wesentlich leichter als die herkömmlichen doppelwandigen Klappen nach dem Stand der Technik ist, was eine entsprechend kleinere Dimensionierung des Klappenantriebs mit sich bringt.

Wie aus der Ausführungsform gemäß Fig. 3 ersichtlich, bietet das neuerungsgemäße Klappenventil auch die Möglichkeit, die Dichtungsanordnung gegenüber herkömmlichen Ventilen dieser Art zu vereinfachen, entweder durch Verwendung einer einzigen, beidseitig anschlagenden Lamellendichtung als Einzeldichtung, oder durch Verwendung einer Gruppe von drei nebeneinanderliegenden Lamellendichtungen, von denen die mittlere beidseitig anschlagen kann, so daß mit nur drei Einzeldichtungen je eine Doppeldichtung für die beiden Schaltstellungen der Klappe resultiert.

Es ist auch beim neuerungsgemäßen Klappenventil von Vorteil, daß die Anlenkungen der Klappe in den zum Durchströmungsraum hin voll abgeschlossenen Gehäusenischen 26, 27 liegen. Dadurch werden Staubablagerungen vermieden.

## Patentansprüche

1. Klappenventil für Rohrleitungen großer Nennweiten, dessen Klappengehäuse (1) zwei mit je einem Gehäusedichtsitz (5 bzw. 6) versehene Leitungsanschlüsse (3 bzw. 4) aufweist, und dessen Ventilklappe zwischen beiden Gehäusedichtsitzen (5 bzw. 6) um eine am Klappenrand angeordnete Schwenkachse (8) schwenkbar ist und sich aus einem Tragrahmen (9) aus Eisenprofilen, einer an dem Tragrahmen (9) befestigten Klappenblende (11) sowie einer an dieser umfänglich befestigten und abwechselnd mit den Gehäusedichtsitzen zusammenwirkenden Dichtungsanordnung (12) zusammensetzt,
dadurch gekennzeichnet,
daß die Klappenblende (11) aus einer einzigen Blechplatte (14) besteht, die mit durch Eisenprofile gebildeten Verstärkungsrippen (15) und einem den Tragrahmen (9) vollumfänglich umschließenden Blechkragen (16) versehen ist, an dem die Dichtungsanordnung (12) befestigt ist, und daß die Anlenkung der Ventilklappe (7) am Klappengehäuse (1) durch mindestens einen gekröpften Scharnierhebel (19, 20) erfolgt, dessen einer Arm (21) am Tragrahmen (9) auf der von der Blechplatte (14) abgekehrten Tragrahmenseite befestigt ist, und dessen anderer Arm (23) um die Achse (8) eines am Klappengehäuse (1) gelagerten Schwenkbolzens (24 bzw. 25) drehbar ist.

2. Klappenventil nach Anspruch 1,
dadurch gekennzeichnet,
daß die Blechplatte (14) am Tragrahmen (9) durch T-Profile (17) aufgehängt ist, die in entsprechenden Gegenprofilen (18) des Tragrahmens (9) geführt sind.

3. Klappenventil nach Anspruch 2,
dadurch gekennzeichnet,
daß die T-Profile (17) im Randbereich der Ventilklappe (7) liegen.

4. Klappenventil nach einem oder mehreren der
vorhergehenden Ansprüche,
dadurch gekennzeichnet,
daß die Verstärkungsrippen (15) als L-Profile ausgebildet sind, deren einer Schenkel stirnseitig an der Blechplatte (14) angeschweißt ist und deren anderer Schenkel großflächig an dem Tragrahmen (9) befestigt ist.

5. Klappenventil nach einem oder mehreren der
vorhergehenden Ansprüche,
dadurch gekennzeichnet,
daß der oder die Scharnierhebel (19, 20) aus im Winkel zueinander zusammengeschweißten Eisenprofilen bestehen, wobei der eine Hebelarm (21) an einem Eisenprofil (22) des Tragrahmens (9) befestigt ist und der andere Hebelarm (23) den Schwenkbolzen (24 bzw. 25) für die Ventilklappe (7) aufnimmt.

6. Klappenventil nach Anspruch 5,
dadurch gekennzeichnet,
daß die Eisenprofile des oder der Scharnierhebel (19, 20) I-Profile sind.

7. Klappenventil nach einem der Ansprüche 1 bis 6,
dadurch gekennzeichnet,
daß der oder die Scharnierhebel (19, 20) in je einer Gehäusenische (26 bzw. 27) des Klappengehäuses (1) eingekapselt sind.

8. Klappenventil nach einem der Ansprüche 1 bis 7,
dadurch gekennzeichnet,
daß die Dichtungsanordnung (12) eine beidseitig wirkende Lamellendichtung (31) aufweist, die in den Schaltstellungen des Ventils gegen je einen der beiden Gehäusedichtsitze (5 bzw. 6) auf Anschlag ist.

## Claims

1. Flap valve for conduits of relatively large nominal width whose flap housing (1) has two conduit connections (3,4) with a respective housing sealing seat (5 and 6, respectively) and whose valve flap is pivotable between the two housing sealing seats (5 and 6) about a pivotal axis (8) arranged at the edge of the flap and is composed of a support frame (9) of steel profiles, a flap shield (11) secured to the support frame (9) and a sealing arrangement (12) peripherally secured to it and cooperating alternately with the housing sealing seats, characterised in that the flap shield (11) comprises a single metal plate (14) which is provided with reinforcing ribs (15) constituted by steel profiles and a metal collar (16), which surrounds the support frame (9) over its entire periphery and to which the sealing arrangement (12) is secured and that the pivotal connection of the valve flap (7) to the flap housing (1) is effected by means of at least one cranked hinge lever (19,20) whose one arm (21) is secured to the support frame (9) on the side of the support frame directed away from the metal plate (14) and whose other arm (23) is rotatable about the axis (8) of a pivot peg (24 and 25, respectively) mounted on the flap housing (1).

2. Flap valve as claimed in claim 1, characterised in that the metal plate (14) is suspended on the support frame (9) by T profiles (17) which are guided in corresponding complementary profiles (18) on the support frame (9).

3. Flap valve as claimed in claim 2, characterised in that the T profiles (17) are situated in the edge region of the valve flap (7).

4. Flap valve as claimed in one or more of the preceding claims, characterised in that the reinforcing ribs (15) are constructed as L profiles, the end surface of one limb of which is welded to the metal plate (14) and whose other limb is secured over a large area to the support frame (9).

5. Flap valve as claimed in one or more of the preceding claims, characterised in that the hinge lever(s) (19,20) comprise steel profiles welded together at an angle to one another, the one lever arm (21) being secured to an steel profile (22) on the support frame (9) and the other lever arm (23) receiving the pivot peg (24 or 24) for the valve flap (7).

6. Flap valve as claimed in claim 5, characterised in that the steel profiles of the hinge lever(s) (19,20) are I profiles.

7. Flap valve as claimed in one of claims 1 to 6, characterised in that the hinge lever(s) (19,20) are encapsulated in a respective housing recess (26 and 27, respectively) in the flap housing (1).

8. Flap valve as claimed in one of claims 1 to 7, characterised in that the sealing arrangement (12) has a leaf seal (31) acting on both sides which is in contact with a respective one of the two housing sealing seats (5 or 6) in the switch positions of the valve.

## Revendications

1. Vanne à papillon pour tuyauteries à grande section nominale, dont le corps (1) comporte deux parties de raccordement (3 et 4) avec chacune un siège d'étanchéité (5 et 6) et dont le papillon est monté pivotant autour d'un axe (8) situé sur le bord du clapet, entre les deux sièges d'étanchéité (5 et 6), et se compose d'un cadre porteur (9) en profiles en fer, d'un battant (11) fixé sur le cadre porteur (9) et d'un système de joints (12) qui est fixé sur le pourtour du battant et coopère alternativement avec les sièges d'étanchéité, caractérisée par le fait que le battant (11) est constitué d'une plaque de tôle (14) unique qui est pourvue de nervures de renfort (15) formées par des profilés en fer et d'un ourlet en tôle (16) qui entoure le cadre porteur (9) sur l'ensemble de son pourtour et sur lequel est fixé le système de joints (12) et par le fait que le papillon (7) est articulé sur le corps de vanne (1) par au moins un bras de charnière (19, 20) coudé dont l'une (21) des ailes est fixée sur le cadre porteur (9), sur la face de celui-ci opposée à la plaque de tôle (14), et dont l'autre aile (23) est montée pivotante autour de l'axe (8) géométrique d'un axe d'articulation (24 ou 25) monté sur le corps de vanne (1).

2. Vanne à papillon selon la revendication 1, caractérisée par le fait que la plaque de tôle (14) est suspendue sur le cadre porteur (9) par des profilés en T (17) qui pénètrent dans des contre-profilés (18) correspondants du cadre porteur (9).

3. Vanne à papillon selon la revendication 2, caractérisée par le fait que les profilés en T (17) sont situés dans la région du bord du papillon (7).

4. Vanne à papillon selon une ou plusieurs des revendications précédentes, caractérisée par le fait que les nervures de renfort (15) sont agencées sous forme de profilés en L dont l'une des ailes est soudée côté face frontale sur la plaque de tôle (14) et dont l'autre aile repose à plat sur le cadre porteur (9).

5. Vanne à papillon selon une ou plusieurs des revendications précédentes, caractérisée par le fait que le ou les bras de charnière (19, 20) sont constitués par des profilés en fer soudés entre eux suivant un angle, l'une des ailes (21) étant fixée sur un profilé (22) en fer du cadre porteur (9) et l'autre aile (23) recevant l'axe (24 ou 25) pour le papillon (7).

6. Vanne à papillon selon la revendication 5, caractérisée par le fait que les profilés en fer du ou des bras de charnière (19, 20) sont des profilés en I.

7. Vanne à papillon selon une ou plusieurs des revendications 1 à 6, caractérisée par le fait que le ou les bras de charnière (19, 20) sont enfermés chacun dans une niche (26 ou 27) du corps de vanne (1).

8. Vanne à papillon selon une ou plusieurs des revendications 1 à 7, caractérisée par le fait que le système de joints (12) comporte un joint à lamelles (31) qui agit des deux côtés et, dans les positions de fonctionnement de la vanne, vient en butée chaque fois contre l'un des deux sièges d'étanchéité (5 et 6).
